# EUROPEAN PATENT APPLICATION

(11) **EP 4 517 948 A1**
(43) Date of publication of application: **05.03.2025**
(21) Application number: 23812162.8
(22) Date of filing: 25.05.2023
(51) Int. Cl.: H01M 50/124, H01M 50/143, H01M 50/117, H01M 50/178, H01M 50/19, H01M 50/211, H01M 50/24, H01M 50/367, H01M 10/04

(54) **SECONDARY BATTERY MODULE AND SECONDARY BATTERY USED THEREFOR**

(30) Priority: 25.05.2022 KR 20220064228; 15.11.2022 KR 20220153107
(71) Applicant: LG Energy Solution, Ltd., Seoul 07335 (KR)
(72) Inventor: PARK, Won Kyoung, Daejeon 34122 (KR); LEE, Kyung Min, Daejeon 34122 (KR); OH, Jae Hun, Daejeon 34122 (KR); YUN, Seung Hyun, Daejeon 34122 (KR); YUN, Hyun Seop, Daejeon 34122 (KR)
(74) Representative: Plasseraud IP
(86) International application number: PCT/KR2023/007118
(87) International publication number: WO 2023/229388

(57) **Abstract**

A secondary battery module according to an embodiment of the present invention may include: a plurality of secondary batteries arranged side by side along one direction; and a housing configured to accommodate the plurality of secondary batteries. At least one of the plurality of secondary batteries may include: an electrode assembly; and a battery case including an accommodation part in which, the electrode assembly is accommodated, and an edge part connected from the accommodation part, the battery case having an outer surface coated with an incombustible material. The incombustible material applied to the edge part may have a thickness greater than that of the incombustible material applied to the accommodation part.

## Description

### TECHNICAL FIELD

### CROSS-REFERENCE TO RELATED APPLICATION

The present application claims the benefit of the priority of Korean Patent Application Nos. 10-2022-0064228, filed on May 25, 2022, and 10-2022-0153107, filed on November 15, 2022, which are hereby incorporated by reference in their entirety.

### TECHNICAL FIELD

The present invention relates to a secondary battery module and a secondary battery used therein, and more particularly, to a secondary battery module including a plurality of secondary batteries and a housing accommodating the plurality of secondary batteries, and a secondary battery used therein.

### BACKGROUND ART

In recent, secondary batteries have attracted considerable attention as power sources for electric vehicles (EVs), hybrid electric vehicles (HEVs), and the like, which have been developed to solve limitations, such as air pollution, caused by existing gasoline and diesel vehicles that use fossil fuels.

While one or two to three or four secondary batteries are used in a small mobile device, a battery module in which a plurality of secondary battery cells are electrically connected to each other, or a battery pack in which a plurality of battery modules are electrically connected to each other is used due to needs for high power and large capacity in medium and large devices such as the electric vehicles.

For example, the battery module may be constituted by a plurality of secondary batteries, a busbar (or metal plate) for connecting the secondary batteries in series and/or parallel, a sensing assembly for sensing a voltage and temperature, an electric component for controlling charging/discharging, and a housing for accommodating the above components. Among the currently commercialized secondary batteries, one of the most spotlighted secondary batteries may be lithium secondary batteries, which are capable of being classified into can-type secondary batteries and pouch-type secondary batteries according to their shapes of exterior materials. Among them, the pouch-type secondary batteries are being widely used in medium and large-sized battery modules because of their high energy density and easy stacking.

As demands for secondary battery modules mounted on vehicles have recently increased, customers are requiring to increase in energy density of the secondary batteries within a limited space of the secondary battery module. In this case, there is a problem in that safety risks related to ignition and explosion of the secondary battery also increase together.

That is, in order to secure safety of a vehicle driver when the secondary battery inside the secondary battery module is ignited, a technology capable of delaying a flame or heat propagation time between the secondary batteries inside the secondary battery module is required so that the driver evacuates before the flame is exposed to the outside of the housing.

### DISCLOSURE OF THE INVENTION

### TECHNICAL PROBLEM

The present invention has been made to solve the above problems, and an object of the present invention is to provide a secondary battery module capable of delaying a flame or heat propagation time between secondary batteries inside the secondary battery module.

### TECHNICAL SOLUTION

A secondary battery module according to an embodiment of the present invention may include: a plurality of secondary batteries arranged side by side along one direction; and a housing configured to accommodate the plurality of secondary batteries. At least one of the plurality of secondary batteries may include: an electrode assembly; and a battery case including an accommodation part in which, the electrode assembly is accommodated, and an edge part connected from the accommodation part, the battery case having an outer surface coated with an incombustible material. The incombustible material applied to the edge part may have a thickness greater than that of the incombustible material applied to the accommodation part.

The edge part may include: a first edge part from which an electrode lead connected to the electrode assembly protrudes; and a second edge part connected to the first edge part and folded at least once. The incombustible material may not be applied to an end of the second edge part.

The edge part may include: a first edge part from which an electrode lead connected to the electrode assembly protrudes; and a second edge part connected to the first edge part and folded at least once. The incombustible material applied to the first edge part may have a thickness greater than that of the incombustible material applied to the second edge part.

The incombustible material may not be applied to an electrode lead connected to the electrode assembly and protruded to the outside of the edge part.

The incombustible material may not be applied to an insulating member configured to insulate the electrode lead from the edge part.

The secondary battery module may further include at least one compression pad disposed adjacent to the secondary battery, wherein an outer surface of the compression pad may be coated with the incombustible material.

The incombustible material may include ceramic.

Surfaces of the secondary battery and the compression pad, which are coated with the incombustible material, may be disposed to face each other.

The compression pad may have a height greater than that of the secondary battery.

At least one or more through-holes that pass through the inside and outside of the housing may be defined in at least one area of the housing.

The at least one or more through-holes may be defined in a top surface of the housing.

The housing may include: a main body configured to surround a portion of a surface of the secondary battery; and a cover part connected to the main body to cover a remaining surface of the secondary battery. The at least one or more through-holes may be defined in the cover part.

The through-holes may be defined in a position facing the battery case.

The through-holes may be defined in a position facing the edge part.

A secondary battery according to an embodiment of the present invention may include: an electrode assembly; a battery case including an accommodation part in which the electrode assembly is accommodated, and an edge part connected from the accommodation part, the battery case having an outer surface coated with an incombustible material. The incombustible material applied to the edge part may have a thickness greater than that of the incombustible material applied to the accommodation part.

The edge part may include: a first edge part from which an electrode lead connected to the electrode assembly protrudes; and a second edge part connected to the first edge part and folded at least once. The incombustible material may not be applied to an end of the second edge part.

The edge part may include: a first edge part from which an electrode lead connected to the electrode assembly protrudes; and a second edge part connected to the first edge part and folded at least once. The incombustible material applied to the first edge part may have a thickness greater than that of the incombustible material applied to the second edge part.

The incombustible material may not be applied to an electrode lead connected to the electrode assembly and protruded to the outside of the edge part.

The incombustible material may not be applied to an insulating member which is configured to insulate the electrode lead from the edge part and of which a portion protrudes to the outside of the edge part.

The incombustible material may include ceramic.

### ADVANTAGEOUS EFFECTS

The present invention may have the advantage in that the flame or heat propagation time between the secondary batteries is delayed by applying the incombustible material to at least one of the secondary batteries to improve the stability of the secondary battery module.

In addition, the present invention may have the advantage in that the flame or heat propagation time between the secondary batteries is delayed by applying the incombustible material to the compression pad to improve the stability of the secondary battery module.

In addition, the present invention may have the advantage in that the through-hole is defined to pass through the inside and outside of the housing in at least one region of the housing to discharge the gas inside the housing to the outside so as to prevent the gas compression in the housing, and the through-hole is defined toward the battery case, particularly the edge part to minimize the risk of sparking of the electrode lead and the gas.

### BRIEF DESCRIPTION OF THE DRAWINGS

FIG. 1 is a front view illustrating a configuration of a secondary battery.
FIG. 2 is an exploded perspective view illustrating a configuration of a secondary battery module according to Embodiment 1 of the present invention.
FIG. 3a is a conceptual view illustrating a state in which a secondary battery of the secondary battery module of FIG. 2 is coated with an incombustible material.
FIG. 3b is a conceptual view illustrating a state in which a compression pad of the secondary battery module of FIG. 2 is coated with an incombustible material.
FIG. 4a is a cross-sectional view illustrating a state after the secondary battery of FIG. 3a is coated with the incombustible material.
FIG. 4b is a cross-sectional view illustrating a state after the compression pad of FIG. 3b is coated with the incombustible material.
FIG. 5 is a perspective view of the secondary battery module of FIG. 2.
FIG. 6 is a cross-sectional view taken along line A-A in FIG. 5.
FIG. 7 is a cross-sectional view taken along line B-B in FIG. 5.

### MODE FOR CARRYING OUT THE INVENTION

Hereinafter, preferred embodiments of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

The present invention provides a secondary battery module 100, which further includes a plurality of secondary batteries 110 arranged side by side along one direction and a housing 120 accommodating the plurality of secondary batteries 110, and in which at least one of the secondary batteries 110 is coated with an incombustible material.

First, the secondary batteries may be configured to be arranged side by side along one direction inside the housing 120 and may include an electrode assembly (not shown) and a battery case 111 accommodating the electrode assembly. The type of the electrode assembly is not limited. For example, the electrode assembly may have a structure of any one of a jelly-roll type (winding type), a stack type (stacked type), or a complex type (stack/folding type).

The electrode assembly may have a configuration in which electrodes and separators are alternately disposed. In more detail, the electrode assembly may have a configuration in which positive electrodes and negative electrodes are alternately disposed with separators therebetween. Specifically, the electrode assembly may have a structure in which positive electrode collector/positive electrode active material layer/separator/negative electrode active material layer/negative electrode collector are sequentially stacked so that the positive electrode active material layer disposed one surface of the separator faces the negative electrode active material layer disposed on the other surface of the separator.

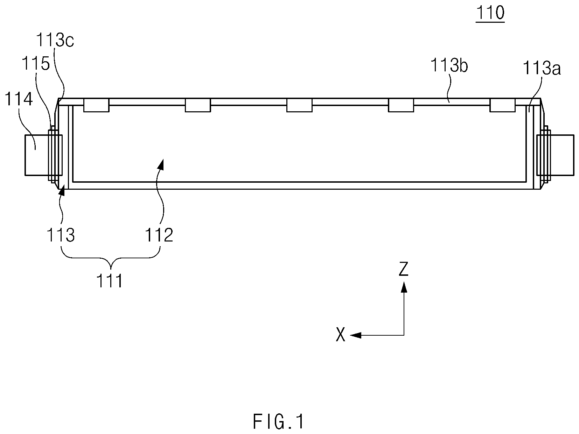

In order to accommodate the above-described electrode assembly, as illustrated in FIG. 1, the battery case 111 may have a structure including an accommodation part 112 accommodating the electrode assembly and an edge part 113 connected from an edge of the accommodation part 112.

In more detail, the battery case 111 may include the accommodation part 112 provided by forming one region of a laminate sheet in which an inner resin layer/metal layer/outer resin layer are sequentially stacked from the inside to the outside and the edge part 113 connected to the edge of the accommodation part 112.

Here, polypropylene (PP) may be used for the inner resin layer, polyethylene terephthalate (PET) may be used for the outer resin layer, and aluminum (Al) may be used for the metal layer. However, the materials of the inner resin layer, the outer resin layer, and the metal layer are not limited thereto, and when each of the inner resin layer and the outer resin layer has an insulating material, and the metal layer has a metal material, the materials may be used without particular limitation.

In addition, the accommodation part 112 may be understood as a region having an empty space by being formed concavely so that the electrode assembly is accommodated in the battery case 111.

In addition, the edge part 113 may be understood as a region connected from the edge of the accommodation part 112 on the battery case 111. The edge part 113 may have a sealed structure, of which an edge is sealed, to prevent the electrode assembly accommodated in the accommodation part 112 from being damaged due to exposure to external moisture or air.

In addition, the edge part 113 may include a first edge part 113a, from which an electrode lead 114 to be described later protrudes, and a second edge part 113b connected to the first edge part 113a and folded at least once. Preferably, the second edge part 113b may be double side-folded (DSF).

For example, the first edge part 113a may be provided at both sides of the secondary battery 110 in a full-length direction, and the second edge part 113b may be provided at at least one side of the secondary battery 110 in a full-width direction.

An outer surface of the battery case 111 may be coated with an incombustible material.

For example, the incombustible material may include a ceramic material. In this case, there is an effect of preventing insulation performance of the secondary battery 110 from being deteriorated due to exposure of the metal layer on the outer surface of the battery case 111.

That is, the metal layer may be exposed at an end of the edge part 113a due to the structure of the battery case 111, and when the battery case 111 is manufactured, in the process of stacking the outer resin layer on the metal layer, a through-hole called a pin hole may be defined in the outer resin layer to expose the metal layer to the outside. Here, the incombustible material made of ceramic may be applied on the metal layer exposed to the outside insulate the metal layer from the outside, thereby improving insulation performance of the secondary battery 110.

However, if necessary, the incombustible material may not be applied to an end 113c of the second edge part 113b. Therefore, when a gas is generated in the secondary battery 110 due to an abnormally high temperature or fire, the end of the second edge part 113b is preferentially broken to induce the gas to be discharged. Thus, the gas may be discharged to the first edge part 113a to prevent flame from being spread through the electrode lead 114.

The secondary battery 110 may include the electrode lead 114 protruding from the battery case 111. In addition, the secondary battery 110 may further include an insulating member 115 that insulates the electrode lead 114 from the edge part 113 of the battery case 111, more specifically, the first edge part 113a.

Here, the electrode lead 114 may be understood as a configuration that protrudes from the battery case 111 and is electrically connected to the electrode assembly described above. In more detail, the electrode lead 114 may have one end connected to electrode tabs (not shown) disposed on the electrode and the other end protruding out of the pouch so as to be connected to the other secondary battery 110 or external device.

The insulating member 115 may surround a portion of the electrode lead 114. The insulating member 115 may be disposed between the edge part 113 and the electrode lead 114. A portion of the edge part 113, more specifically, a portion of the first edge part 113a may be sealed with the insulating member 115. The insulating member 115 may be an insulating film or an insulating tape. A portion of the insulating member 115 may protrude outward from the edge part 113.

The incombustible material may not be applied to the electrode lead 114, further more, to the insulating member 115.

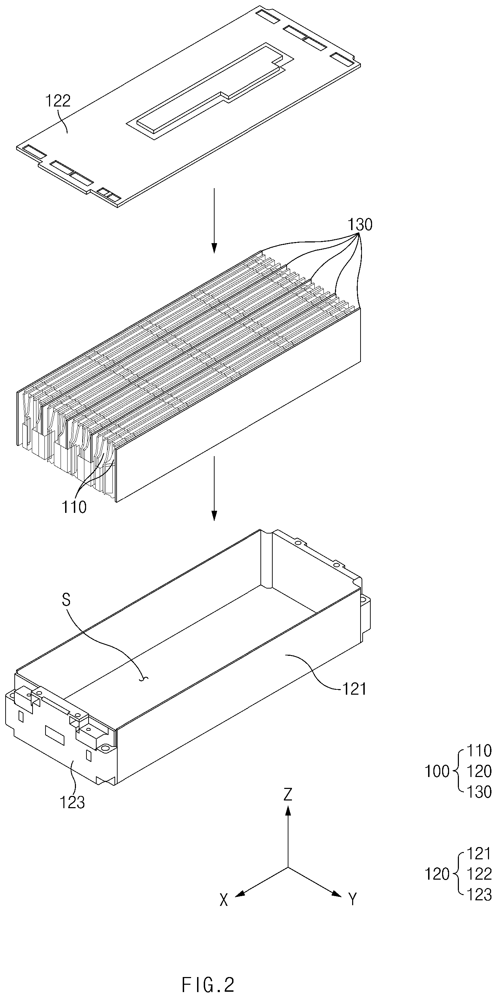

The secondary batteries 110 as described above may be arranged side by side along one direction, as illustrated in FIG. 2, in order to improve energy density of the secondary battery module 100 in the accommodation space inside the housing 120. Here, one direction may be understood as a direction parallel to a Y-axis of FIG. 2.

At this time, at least one of the secondary batteries 110 may be coated with the incombustible material on the outer surface to delay or prevent the propagation of flame or heat to other secondary batteries 110 adjacent thereto even if one secondary battery 110 starts to ignite.

In this case, all of the secondary batteries 110 arranged in one direction may be coated with the incombustible material, or only some of the secondary batteries 110 arranged in one direction may be coated with the incombustible material. In addition, it goes without saying that the entire outer surface of the secondary battery 110 may be coated with the incombustible material, or only a portion of the outer surface may be coated with the incombustible material.

Here, the incombustible material may be any material as long as the incombustible material is capable of delaying the flame or heat propagation between the secondary batteries 110, which are adjacent to each other, and may include, for example, a ceramic material.

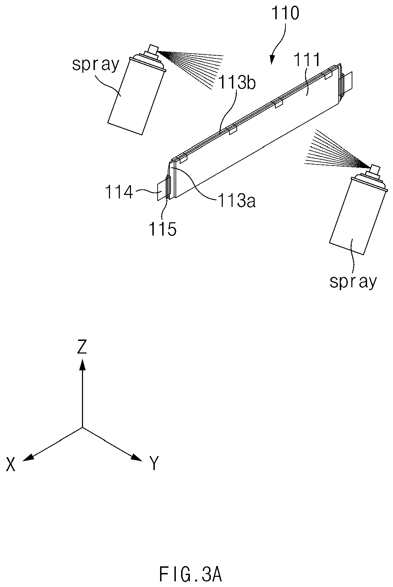

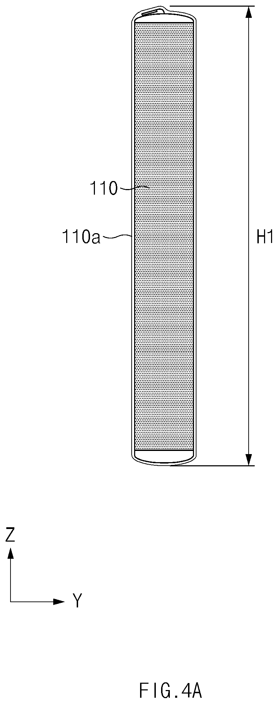

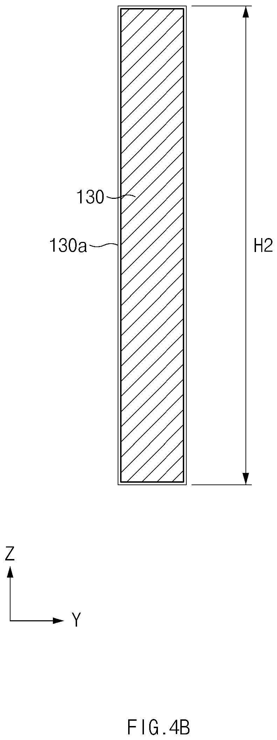

In addition, the incombustible material may be applied to the secondary battery 110 in various manners. For example, as illustrated in FIG. 3a, the incombustible material may be spray-applied to the secondary battery 110 by a spraying device. In this case, as illustrated in FIG. 4a, an incombustible coating layer 110a may be formed on the outer surface of the secondary battery 110.

As illustrated in FIG. 3a, in the process of spray-applying the secondary battery 110, a support member (not shown) such as a gripper may grip the electrode lead 114 and/or the insulating member 115 to support the secondary battery 110. As a result, the incombustible material may be entirely applied to the battery case 111 without interfering with the support member. In addition, the incombustible material may be prevented from being applied to the electrode lead 114 without a separate masking member.

In addition, the incombustible coating layer 110a may be applied to the secondary battery 110 in various thicknesses, but it may be preferable that the incombustible coating layer 110a is formed on the outer surface of the secondary battery 110 to a thickness of 0.01 mm to 1 mm.

This is because, when the thickness of the incombustible coating layer 110a is less than 0.01 mm, the coating of the incombustible material is not smoothly performed in the process, and an uncoated area may occur on the outer surface of the secondary battery 110, and when the thickness exceeds 1 mm, the thickness of the incombustible coating layer 110a becomes too thick, a side effect of being separated from the outer surface of the secondary battery 110 occurs.

The thickness of the incombustible coating layer 110a on the edge part 113 may be thicker than the thickness of the incombustible coating layer 110a on the accommodation part 112. That is, the thickness of the incombustible material applied to the edge part 113 may be thicker than the thickness of the incombustible material applied to the accommodation part 112. The edge part 113 having a sealed structure by sealing is more vulnerable to breakage than the accommodation part 112, and thus, there is a risk that flames is preferentially emitted or invaded from the edge part 113. In order to prevent such a concern, the thick incombustible coating layer 110a is formed on the edge part 113 to delay the breakage of the sealing and also delay the propagation of the flame.

Also, the thickness of the incombustible coating layer 110a on the first edge part 113a may be thicker than the thickness of the nonflammable coating layer 110a on the second edge part 113b. That is, the thickness of the incombustible material applied to the first edge part 113a may be greater than the thickness of the incombustible material applied to the second edge part 113b. The first edge part 113a from which the electrode lead 114 protrudes is vulnerable to the propagation of the flame, and there is a possibility that the sealing strength is relatively lower than that of the second edge part 113b folded at least once. In order to prevent such a concern, the thicker incombustible coating layer 110a may be formed on the first edge part 113a to delay the breakage of the sealing and also delay the propagation of the flame.

The secondary battery module 100 may further include at least one compression pad 130 disposed adjacent to the secondary battery 110.

Here, the compression pad 130 is disposed adjacent to the secondary battery 110 in an accommodation space S of the housing 120, and various configurations are possible.

Specifically, the compression pad 130 may be made of a deformable material to prevent the module from being damaged by flexibly compensating for the space when swelling of the secondary battery 110 occurs. For example, the compression pad 130 may be made of a polyurethane material.

Here, the outer surface of the compression pad 130 may also be coated with the incombustible material in order to delay or prevent the propagation of the flame or heat between the secondary batteries 110.

Here, when the compression pad 130 is provided in plurality, all of the plurality of compression pads 130 may be coated with the incombustible material, or only some of the plurality of compression pads 130 may be coated with the incombustible material. In addition, it goes without saying that the entire outer surface of the compression pad 130 may be coated with the incombustible material, or only a portion of the outer surface may be coated with the incombustible material.

Here, the incombustible material may be any material as long as the incombustible material is capable of delaying the flame or heat propagation between the secondary batteries 110, which are described above, and may include, for example, a ceramic material.

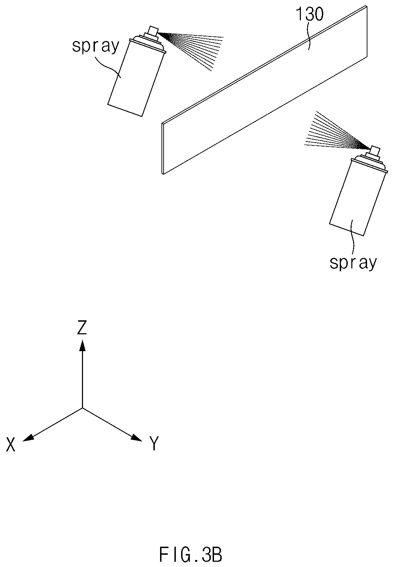

In addition, the incombustible material may be applied to the compression pad 130 in various manners. For example, as illustrated in FIG. 3b, the incombustible material may be spray-applied to the compression pad 130 by a spraying device. In this case, as illustrated in FIG. 4a, an incombustible coating layer 130a may be formed on the outer surface of the compression pad 130.

In addition, the incombustible coating layer 130a may be applied to the compression pad 130 in various thicknesses, but it may be preferable that the incombustible coating layer 130a is formed on the outer surface of the compression pad 130 to a thickness of 0.01 mm to 1 mm.

This is because, when the thickness of the incombustible coating layer 130a is less than 0.01 mm, the coating of the incombustible material is not smoothly performed in the process, and an uncoated area may occur on the outer surface of the compression pad 130, and when the thickness exceeds 1 mm, the thickness of the incombustible coating layer 130a becomes too thick, a side effect of being separated from the outer surface of the compression pad 130 occurs.

The compression pad 130 may have various heights and widths.

In this case, it may be preferable to form the compression pad 130 having a height and width higher than those of the adjacent secondary battery 110 so as to delay or prevent the flame propagation between the secondary batteries 110 disposed with the compression pad 130 therebetween. For example, a height H2 of the compression pad 130 may be higher than a height H1 of the secondary battery 110, as illustrated in FIGS. 4a to 4b (H2>H1).

The compression pad 130 may be disposed between the plurality of secondary batteries 110 or between the secondary batteries 110 and the housing 120. Here, the compression pad 130 may be disposed adjacent to the secondary battery 110 coated with the incombustible material. In this case, the secondary battery 110 and the compression pad 130 may be disposed so that surfaces coated with the incombustible material are disposed to face each other to effectively delay the propagation of the flame or heat between the secondary batteries 110.

The housing 120 is configured to accommodate the plurality of secondary batteries 110 and/or the compression pad 130, and various configurations are possible.

Specifically, the housing 120 may have a structure in which the accommodation space S is defined therein to accommodate the plurality of secondary batteries 110 and/or the compression pad 130. For example, the housing 120 may include a main body 121 surrounding a portion of a surface of the secondary battery 110 and a cover part 122 connected to the main body 121 to cover the remaining surface of the secondary battery 110.

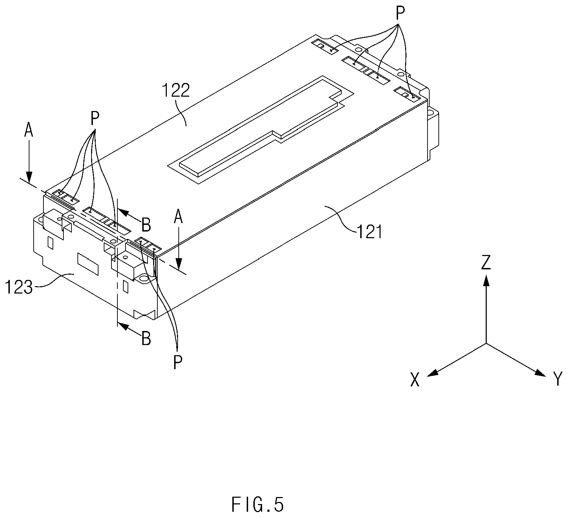

Here, the main body 121 may include a bottom portion (not shown) parallel to an X-Y plane of FIG. 5 and a pair of side portions (not shown) extending from both ends of the bottom portion in an upward direction (Z direction in FIG. 5). In this case, the main body 121 may be formed in a ' 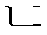 ' shape to surround a portion of the surface of the secondary battery 110.

In addition, the cover part 122 may be connected to the side portion and be provided in a ' 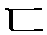 '-shaped opening to cover the remaining surface of the secondary battery 110. For example, the cover part 122 may be provided at an upper side of the main body 121 to cover a top surface of the secondary battery 110.

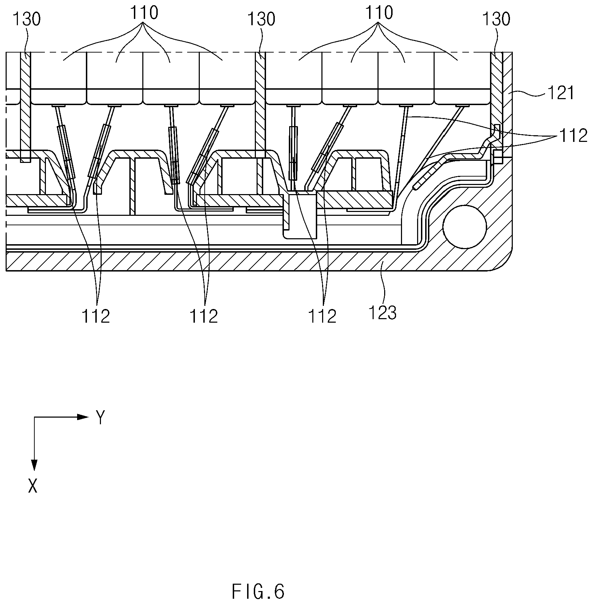

A surface of the main body 121 that is not covered by the cover part 122 may be covered by an end plate 123. For example, the end plate 123 may be provided at the bottom portion of the main body 121 so as to be connected to both ends on which the side surfaces are not formed, and as illustrated in FIG. 6, the end plate 123 may be disposed on an area corresponding to the electrode lead 114.

The housing 120 having the above structure has at least one or more through-holes P in at least one region so that a gas generated by ignition in the secondary battery 110 is discharged from the accommodation space S to the outside.

Here, at least one or more through-holes P may be defined in a top surface of the housing 120 in consideration of a difference in density between the gas, which is generated in the secondary battery 110, and air, prevention of secondary damage due to the gas discharge from the secondary battery 110, and ease in manufacturing process. That is, when the housing 120 has a structure including the main body 121 and the cover part 122 as described above, at least one or more through-holes P may be defined in the cover part 122.

When a gas discharge path passes through the electrode lead 114, it is preferable that the formation direction of the through-hole P is defined at a position that does not overlap the electrode lead 114 in consideration of an occurrence of an impact such as sparks. In this case, the through-hole P may be defined at a position facing the battery case 111.

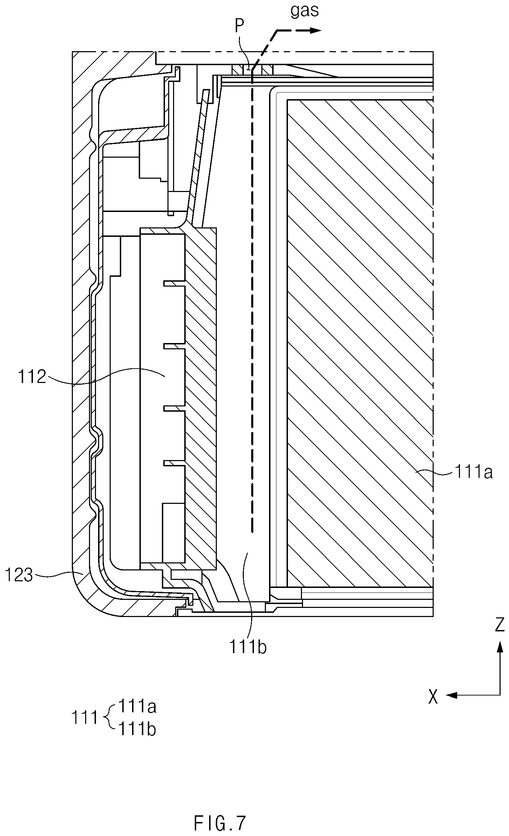

Even at this time, since the accommodation part 112 on the battery case 111 is a region in which the electrode assembly is accommodated, as illustrated in FIG. 7, it may be more preferable that the through-hole P is defined at a position facing the edge part 113 to protect the electrode assembly from the outside. In this case, the through-hole P may be defined at a position facing the edge part 113 disposed in a width direction (Z direction in FIG. 1) of the secondary battery 110.

The secondary battery module 100 of the present invention may include a plurality of secondary batteries 110 arranged side by side along one direction; a housing 120 accommodating the plurality of secondary batteries 110; and at least one compression pad 130 disposed adjacent to the secondary battery 110, and an outer surface of the compression pad 130 is coated with an incombustible material.

Particularly, the compression pad 130 may be coated with the incombustible material including ceramic, and a height of the compression pad 130 may be higher than that of the adjacent secondary battery 110. In addition, at least one or more through-holes P passing through the inside and outside of the housing may be defined in at least one area of the housing 120.

Here, specific details related to the secondary battery 110, the housing 120, and the compression pad 130 may be substituted for the above-described contents.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

| | | | |
|---|---|---|---|
| 100: | Secondary battery module | 110: | Secondary battery |
| 110a: | Incombustible coating layer | 111: | Battery case |
| 112: | Accommodation part | 113: | Edge part |
| 113a: | First edge part | 113b: | Second edge part |
| 114: | Electrode lead | 115: | Insulating member |
| 120: | Housing | 121: | Main body |
| 122: | Cover part | 123: | End plate |
| 130: | Compression pad | 130a: | Incombustible coating layer |
| H1: | Height of secondary battery | H2: | Height of compression pad |
| S: | Accommodation space | P: | Through-hole |

## Claims

1. A secondary battery module comprising:
a plurality of secondary batteries arranged side by side along one direction; and
a housing configured to accommodate the plurality of secondary batteries,
wherein at least one of the plurality of secondary batteries comprises:
an electrode assembly; and
a battery case comprising an accommodation part in which, the electrode assembly is accommodated, and an edge part connected from the accommodation part, the battery case having an outer surface coated with an incombustible material,
wherein the incombustible material applied to the edge part has a thickness greater than that of the incombustible material applied to the accommodation part.

2. The secondary battery module of claim 1, wherein the edge part comprises:
a first edge part from which an electrode lead connected to the electrode assembly protrudes; and
a second edge part connected to the first edge part and folded at least once,
wherein the incombustible material is not applied to an end of the second edge part.

3. The secondary battery module of claim 1, wherein the edge part comprises:
a first edge part from which an electrode lead connected to the electrode assembly protrudes; and
a second edge part connected to the first edge part and folded at least once,
wherein the incombustible material applied to the first edge part has a thickness greater than that of the incombustible material applied to the second edge part.

4. The secondary battery module of claim 1, wherein the incombustible material is not applied to an electrode lead connected to the electrode assembly and protruded to the outside of the edge part.

5. The secondary battery module of claim 4, wherein the incombustible material is not applied to an insulating member configured to insulate the electrode lead from the edge part.

6. The secondary battery module of claim 1, further comprising at least one compression pad disposed adjacent to the secondary battery,
wherein an outer surface of the compression pad is coated with the incombustible material.

7. The secondary battery module of any one of claims 1 to 6, wherein the incombustible material comprises ceramic.

8. The secondary battery module of claim 6, wherein surfaces of the secondary battery and the compression pad, which are coated with the incombustible material, are disposed to face each other.

9. The secondary battery module of claim 6, wherein the compression pad has a height greater than that of the secondary battery.

10. The secondary battery module of claim 1, wherein at least one or more through-holes that pass through the inside and outside of the housing are defined in at least one area of the housing.

11. The secondary battery module of claim 10, wherein the at least one or more through-holes are defined in a top surface of the housing.

12. The secondary battery module of claim 10, wherein the housing comprises:
a main body configured to surround a portion of a surface of the secondary battery; and
a cover part connected to the main body to cover a remaining portion of the surface of the secondary battery,
wherein the at least one or more through-holes are defined in the cover part.

13. The secondary battery module of claim 10, wherein the through-holes are defined in a position facing the battery case.

14. The secondary battery module of claim 13, wherein the through-holes are defined in a position facing the edge part.

15. A secondary battery comprising:
an electrode assembly;
a battery case comprising an accommodation part in which the electrode assembly is accommodated, and an edge part connected from the accommodation part, the battery case having an outer surface coated with an incombustible material,
wherein the incombustible material applied to the edge part has a thickness greater than that of the incombustible material applied to the accommodation part.

16. The secondary battery of claim 15, wherein the edge part comprises:
a first edge part from which an electrode lead connected to the electrode assembly protrudes; and
a second edge part connected to the first edge part and folded at least once,
wherein the incombustible material is not applied to an end of the second edge part.

17. The secondary battery of claim 15, wherein the edge part comprises:
a first edge part from which an electrode lead connected to the electrode assembly protrudes; and
a second edge part connected to the first edge part and folded at least once,
wherein the incombustible material applied to the first edge part has a thickness greater than that of the incombustible material applied to the second edge part.

18. The secondary battery of claim 15, wherein the incombustible material is not applied to an electrode lead connected to the electrode assembly and protruded to the outside of the edge part.

19. The secondary battery of claim 18, wherein the incombustible material is not applied to an insulating member which is configured to insulate the electrode lead from the edge part and of which a portion protrudes to the outside of the edge part.

20. The secondary battery of any one of claims 15 to 19, wherein the incombustible material comprises ceramic.
